# FASCICULE DE BREVET EUROPEEN

(11) **EP 2 069 613 B1**
(45) Date de publication et mention de la délivrance du brevet: **13.11.2019**
(21) Numéro de dépôt: 07848281.7
(22) Date de dépôt: 25.09.2007
(51) Int. Cl.: F01L 9/04

(54) **PROCÉDÉ DE COMMANDE INDIVIDUALISÉE D'ENSEMBLE D'ACTIONNEURS DE SOUPAPES PAR L'ECU**
VERFAHREN ZUR EINZELSTEUERUNG EINES SATZES VON VENTILAKTUATOREN DURCH EINE ELEKTRONISCHE STEUEREINHEIT
METHOD FOR THE INDIVIDUAL CONTROL OF A SET OF VALVE ACTUATORS BY THE ECU

(30) Priorité: 25.09.2006 FR 0608374; 19.09.2007 WO PCT/FR2007/001521
(43) Date de publication de la demande: 17.06.2009
(73) Titulaire: Valeo Systèmes de Contrôle Moteur, 95892 Cergy Pontoise (FR)
(72) Inventeur: GELEZ, Nicolas, 78230 Le Pecq (FR); BOUCHEZ, Boris, 78100 Saint Germain en Laye (FR); DANIOUX, Ronan, 95000 Cergy (FR)
(74) Mandataire: Ipside
(86) Numéro de dépôt international: PCT/FR2007/001558
(87) Numéro de publication internationale: WO 2008/037889

(56) Documents cités:
- FR-A- 2 616 481
- JP-A- 2002 221 012
- US-A1- 2002 059 908
- US-B1- 6 278 932

## Description

La présente invention concerne un système de gestion d'un moteur thermique à soupapes tel qu'un moteur multicylindre à quatre temps d'un véhicule automobile.

### ARRIERE PLAN DE L'INVENTION

Un tel système de gestion comprend une unité de contrôle moteur (ou ECU pour "Engine Control Unit") reliée par un bus série à une unité de contrôle de soupapes (ou VCU pour "Valve Control Unit") elle-même reliée à des actionneurs électromagnétiques de soupapes. L'unité de contrôle moteur est agencée pour définir, en fonction notamment du régime et de la charge du moteur, des instructions de commande de soupapes qu'elle transmet sur le bus série dans une trame unique avec des informations relatives au fonctionnement du moteur tel que le régime moteur et sa température. Les instructions de commande comprennent des modes de déplacement des soupapes, des angles d'ouverture et des angles de fermeture de celles-ci. L'unité de contrôle de soupapes reçoit cette trame et élabore, à partir des instructions de commande contenues dans la trame, des consignes de pilotage des soupapes qu'elle transmet individuellement à chaque actionneur de soupape. L'architecture de ce système rend difficile pour les constructeurs son adaptation à différents types de moteur, plus particulièrement lorsque le nombre de cylindres est différent d'un moteur à l'autre. Ceci suppose en effet de reprogrammer l'unité de contrôle moteur et de changer l'unité de contrôle de soupapes pour un modèle adapté au nombre d'actionneurs à commander. En outre, l'unité de commande de soupapes renvoie à l'unité de contrôle moteur une trame unique contenant d'une part des informations indiquant si les instructions de commandes ont été effectivement appliquées ou pas et, d'autre part, des informations relatives au fonctionnement de l'unité de contrôle de soupapes. Avec cette architecture du système de gestion, il est difficile de faire remonter des informations individualisées sur le fonctionnement des actionneurs. Le document US 6278932 décrit un système de gestion moteur ainsi que son procédé de fonctionnement.

### OBJET DE L'INVENTION

Un but de l'invention est de proposer un système ayant une relativement bonne flexibilité permettant son adaptation à différentes configurations moteur ou à différentes méthodes de pilotage.

### RESUME DE L'INVENTION

A cet effet, on prévoit, selon l'invention, un système de gestion d'un moteur thermique à soupapes, selon la revendication 1.

Ainsi, les actionneurs sont répartis en plusieurs ensembles directement reliés au bus de communication et l'unité de contrôle moteur transmet directement à ces ensembles les consignes de pilotage. La répartition est fonctionnelle (c'est-à-dire de préférence logique au sein de l'unité de commande) et n'est pas liée à la structure physique du système de gestion.

De préférence, le moteur thermique comportant plusieurs cylindres ayant chacun au moins une soupape associée à un actionneur de soupape, chaque ensemble correspond à un cylindre. Ceci facilite l'adaptation du système de gestion à des moteurs ayant des nombres de cylin-dres différents. L'intervention nécessaire sur l'unité de contrôle moteur se limite à une relativement petite modification de la programmation.

L'unité de contrôle moteur, qui pilote en général directement l'injecteur et la bougie (dans les moteurs à allumage commandé) associés à chaque cylindre, pilote aussi ici l'ensemble d'actionnement de ce cylindre.

Il est ainsi possible de faire remonter à l'unité de contrôle moteur des informations précises relatives à chaque actionneur et notamment des angles réellement appliqués, des températures de fonctionnement, des tensions... de telle manière qu'en cas d'anomalie, l'unité de contrôle moteur puisse décider de condamner l'actionneur défectueux.

D'autres caractéristiques et avantages de l'invention ressortiront à la lecture de la description qui suit d'un mode de réalisation particulier non limitatif de l'invention.

### BREVE DESCRIPTION DES DESSINS

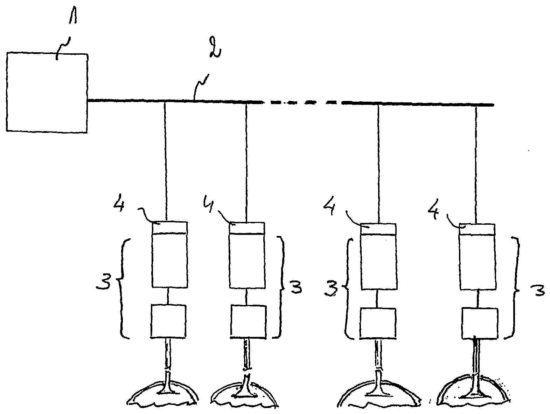

Il sera fait référence à la figure unique annexée représentant schématiquement un système de gestion conforme à l'invention.

### DESCRIPTION DETAILLEE DE L'INVENTION

En référence à la figure, le système de gestion conforme à l'invention comprend une unité de contrôle moteur 1 reliée à un bus de communication, ici un bus série 2, auquel sont reliés des actionneurs 3 de soupapes.

L'unité de contrôle 1 comprend de façon connue en elle-même un calculateur associé à une mémoire comprenant des données de cartographie d'angles d'ouverture et de fermeture de soupapes en fonction notamment du régime et de la charge du moteur, de modes de déplacement des soupapes (commutation ou balistique)... L'unité de contrôle moteur est également reliée à des organes de détection du régime moteur, de la charge du moteur, de températures... et à d'autres composants du moteur thermique comme les injecteurs, les bougies, le système de refroidissement...

Le bus 2 est ici un bus de type CAN (pour "Controller Area Network")
Les actionneurs 3 comportent de façon connue en soi un circuit de commande relié à un circuit de puissance lui-même relié à des bobines d'attraction d'un organe d'actionnement des soupapes vers deux positions extrêmes correspondant respectivement à la position d'ouverture de la soupape et à la position de fermeture de la soupape.

Chaque actionneur 3 est pourvu d'une interface de connexion 4 au bus 2 permettant au circuit de commande de l'actionneur de recevoir des trames émises à son intention par l'unité de contrôle moteur 1 et de renvoyer des trames à l'unité de contrôle moteur 1. Chaque actionneur 3 associé à une interface de connexion 4 constitue un ensemble avec lequel communique l'unité de contrôle moteur 1.

L'unité de contrôle moteur 1 est ainsi agencée pour émettre à destination de chaque actionneur 3 des trames comportant des consignes de pilotage de l'actionneur 3 sur deux tours de vilebrequin (ces consignes comprennent les angles d'ouverture et de fermeture des soupapes, le mode de déplacement...) et des informations sur des paramètres de fonctionnement du moteur tels que le régime, la température de liquide de refroidissement...

L'ensemble formé par le circuit de commande de l'actionneur 3 et l'interface de connexion 4 est agencé pour, à la réception d'une trame émise à son intention par l'unité de contrôle moteur 1, extraire de la trame les consignes de pilotage et commander le circuit de puissance de l'actionneur conformément aux consignes de pilotage reçues et pour renvoyer à l'unité de contrôle moteur 1 une trame comprenant des informations de diagnostic de l'actionneur telles que les angles d'ouverture et de fermeture réellement appliqués, la température de l'actionneur, la tension au sein de l'actionneur... et autres informations de ce type qui peuvent notamment révéler un disfonctionnement par exemple de l'actionneur.

A la réception des trames provenant de ces ensembles, l'unité de contrôle moteur 1 analyse les informations reçues notamment pour vérifier que l'une d'entre elles n'est pas révélatrice d'une défaillance susceptible à terme d'entraîner un dysfonctionnement général du moteur. Le cas échéant, l'unité de contrôle moteur 1 peut décider de stopper l'actionneur défaillant.

On peut prévoir qu'au sein de l'unité de contrôle moteur 1, les actionneurs soient affectés à des groupes et que, lorsqu'un actionneur d'un groupe est défaillant, l'unité de contrôle stoppe tous les actionneurs du groupe. Il va de soi que moins les groupes comporteront d'actionneurs, moins leur condamnation sera pénalisante pour le fonctionnement du moteur.

De préférence, les actionneurs sont regroupés de façon fonctionnelle ou logique au sein de l'unité de contrôle moteur 1 par cylindre. Chaque trame envoyée par l'unité de contrôle moteur 1 contient ainsi des consignes de pilotage et des informations concernant l'actionneur ou les actionneurs d'un cylindre. Lorsqu'il y a plus d'un actionneur par cylindre, il est alors possible de prévoir un circuit de commande commun à tous les actionneurs d'un cylindre.

Lorsque l'un des actionneurs d'un cylindre est défaillant, l'unité de contrôle moteur n'émet plus de trames à destination du ou des actionneurs de ce cylindre. Le moteur thermique comportant au moins deux cylindres peut néanmoins continuer à fonctionner au moins pour permettre au véhicule de rejoindre le lieu où il sera réparé.

Le regroupement par cylindre facilite en outre l'adaptation du système de gestion à des moteurs comportant des nombres de cylindres différents.

Bien entendu, l'invention n'est pas limitée au mode de réalisation décrit et on peut y apporter des variantes de réalisation sans sortir du cadre de l'invention tel que défini par les revendications.

En particulier, bien que l'invention ait ici été décrite avec des ensembles de pilotage comprenant un seul actionneur, un tel ensemble peut regrouper deux actionneurs ou plus, étant entendu qu'il est nécessaire qu'il y ait au moins deux ensembles.

## Revendications

1. Système de gestion d'un moteur thermique à soupapes, comprenant une unité de contrôle moteur (1) et une pluralité d'actionneurs (3) de soupapes, l'unité de contrôle moteur étant reliée à un bus de communication (2) et les actionneurs étant répartis en au moins deux ensembles pourvus chacun d'une interface de connexion (4) de l'actionneur au bus de communication, l'unité de contrôle moteur étant agencée pour définir des consignes de pilotage des actionneurs et pour émettre dans le bus à destination de chaque ensemble une trame individualisée comportant les consignes de pilotage pour l'ensemble concerné, chaque actionneur (3) étant agencé pour émettre, dans le bus (2), à destination de l'unité de contrôle moteur (1), une trame comportant une valeur d'un paramètre de fonctionnement de l'actionneur,
**caractérisé en ce que** chaque ensemble formé par le circuit de commande de l'actionneur (3) et l'interface de connexion (4) est agencé pour, à la réception d'une trame émise à son intention par l'unité de contrôle moteur (1), extraire de la trame les consignes de pilotage et commander un circuit de puissance de l'actionneur conformément aux consignes de pilotage reçues, et pour renvoyer à l'unité de contrôle moteur (1) une trame comprenant des informations de diagnostic de l'actionneur,
et **en ce que** le moteur thermique comporte plusieurs cylindres ayant chacun au moins une soupape associée à un actionneur (3) de soupape, chaque ensemble correspond à un cylindre et chaque ensemble ne comportant qu'un actionneur (3) auquel l'interface de connexion (4) est reliée.

## Patentansprüche

1. Managementsystem für einen Verbrennungsmotor mit Ventilen, umfassend eine Motorsteuerungseinheit (1) und eine Vielzahl von Stellgliedern (3) für Ventile, wobei die Motorsteuerungseinheit mit einem Kommunikationsbus (2) verbunden ist und die Stellglieder auf mindestens zwei Einheiten aufgeteilt sind, die jeweils mit einer Anschlussschnittstelle (4) des Stellglieds an den Kommunikationsbus versehen sind, wobei die Motorsteuerungseinheit angeordnet ist, um Ansteuerungsvorgaben der Stellglieder zu definieren und um in dem Bus zu jeder Einheit einen individuellen Raster zu senden, der die Ansteuerungsvorgaben für die betroffene Einheit beinhaltet, wobei jedes Stellglied (3) angeordnet ist, um in dem Bus (2) zur Motorsteuerungseinheit (1) einen Raster zu senden, der einen Wert eines Betriebsparameters des Stellglieds beinhaltet,
**dadurch gekennzeichnet, dass** jede Einheit, die durch den Regelkreis des Stellglieds (3) und die Anschlussschnittstelle (4) gebildet wird, angeordnet ist, um bei Empfang eines Rasters, der von der Motorsteuerungseinheit (1) zu ihm gesendet wird, aus dem Raster die Ansteuerungsvorgaben zu extrahieren, und einen Leistungskreis des Stellglieds entsprechend den empfangenen Ansteuerungsvorgaben zu steuern, und um zur Motorsteuerungseinheit (1) einen Raster zurückzusenden, der Informationen zur Diagnose des Stellglieds umfasst, und dadurch, dass der Verbrennungsmotor mehrere Zylinder beinhaltet, die jeweils mindestens ein Ventil aufweisen, das einem Stellglied (3) für ein Ventil zugeordnet ist, wobei jede Einheit einem Zylinder entspricht und jede Einheit nur ein Stellglied (3) beinhaltet, mit dem die Anschlussschnittstelle (4) verbunden ist.

## Claims

1. System for managing a heat engine having valves, comprising an engine control unit (1) and a plurality of actuators (3) of valves, the engine control unit being connected to a communication bus (2) and the actuators being divided into at least two sets each provided with an interface (4) for connection of the actuator to the communication bus, the engine control unit being arranged to define rules for control of the actuators and to emit, in the bus and to each set, an individualised frame comprising the control rules for the set in question, each actuator (3) being arranged to emit, in the bus (2), to the engine control unit (1), a frame comprising a value of an operating parameter of the actuator, **characterised in that** each set formed by the control circuit of the actuator (3) and the connection interface (4) is arranged to, upon reception of a frame emitted to it by the engine control unit (1), extract, from the frame, the control rules and control a power circuit of the actuator in accordance with the control rules received, and to send back, to the engine control unit (1), a frame comprising diagnostic information of the actuator,
and **in that** the heat engine comprises a plurality of cylinders each having at least one valve associated with a valve actuator (3), each set corresponds to a cylinder and each set only comprises one actuator (3) to which the connection interface (4) is connected.
